# EUROPEAN PATENT APPLICATION

(11) **EP 4 729 323 A1**
(43) Date of publication of application: **22.04.2026**
(21) Application number: 24842366.7
(22) Date of filing: 16.07.2024
(51) Int. Cl.: B60J 1/00, C03C 23/00

(54) **GLASS PLATE**

(30) Priority: 17.07.2023 CN 202310872377
(71) Applicant: Fuyao Glass Industry Group Co., Ltd., Fuqing, Fujian 350300 (CN)
(72) Inventor: WANG, Hongfei, Fujian 350300 (CN); LI, Weijun, Fujian 350300 (CN); ZHAN, Zhiyu, Fujian 350300 (CN)
(74) Representative: Rausa, Mario Alberto Manlio
(86) International application number: PCT/CN2024/105651
(87) International publication number: WO 2025/016377

(57) **Abstract**

A glass plate (1), comprising a first compressive stress area (31) and a first tensile stress area (32) that are sequentially adjacent to each other from the edge to the inside, wherein the width of the first compressive stress area (31) is K1, and the width of the first tensile stress area (32) is K2; at least one surface of the glass plate (1) is provided with a conductive element (2), the orthographic projection of the conductive element (2) on the surface of the glass plate (1) does not overlap the first tensile stress area (32), the distance T between the side of the conductive element (2) close to the edge of the glass plate (1) and the edge of the glass plate (1) is greater than or equal to K1+K2, and the tensile stress in an orthographic projection area of the conductive element (2) on the surface of the glass plate (1) is less than or equal to 9 MPa. By controlling the position of the conductive element on the glass plate, in the forming process of the glass plate, the stress area formed by the contact between a mold and the glass plate overlaps or offsets the stress area formed by the conductive element, so that new stress distribution is formed at the edge of the glass plate, reducing the risk of glass plate breakage.

## Description

### CROSS-REFERENCE TO RELATED APPLICATIONS

This application claims priority to Chinese patent application No. 2023108723775, entitled "Glass Plate", filed on July 17, 2023, the disclosure of which is incorporated herein by reference in its entirety.

### TECHNICAL FIELD

The present application relates to the technical field of glass.

### BACKGROUND

In automotive glass, for glass products with antennas or heating wires, improper use of a glaze at an edge or unreasonable position arrangement of a conductive element can easily lead to the superimposition of the tensile stress generated by a conductive element near the edge of the glass plate and the tensile stress generated by the support of a mold on the edge of the glass plate in the subsequent process for molding a glass plate, which causes excessive tensile stress at the position of the conductive element, causing the risk that the glass plate tends to crack at the position of the conductive element.

### SUMMARY

According to various embodiments of the present application, the present application provides a glass plate.

A glass plate includes a first compressive stress area and a first tensile stress area which are adjacent to each other and arranged in sequence from an edge to an inside. A width of the first compressive stress area is denoted by K1, and a width of the first tensile stress area being denoted by K2.

A conductive element is disposed on at least one surface of the glass plate. An orthographic projection of the conductive element on the surface of the glass plate does not overlap with the first tensile stress area. The following relationship is satisfied: T ≥ K1+K2, where T denotes a distance between an edge of the glass plate and a side of the conductive element adjacent to the edge of the glass plate. A tensile stress in an area corresponding to the orthographic projection of the conductive element on the surface of the glass plate is less than or equal to 9 MPa.

Specifically, the following relationship is satisfied: 5 mm ≤ x1 ≤ 15 mm, where x1 denotes a distance between a glass edge and a side edge of the first tensile stress area adjacent to the glass edge. The following relationship is satisfied: 20 mm ≤ x2 ≤ 35 mm, where a distance, between the glass edge and a side edge of the first tensile stress area away from the glass edge.

Specifically, the width K1 of the first compressive stress area satisfies the following relationship: K1 ≤ x1, and the width K2 of the first tensile stress area satisfies the following relationship: K2 = x2 - x1.

Specifically, the distance T between the edge of the glass plate and the side of the conductive element adjacent to the edge of the glass plate is equal to or greater than 30 mm.

Specifically, the glass plate further includes a second compressive stress area, and a second tensile stress area adjacent to the second compressive stress area and located on a side of the second compressive stress area away from the edge of the glass plate. The distance T between the edge of the glass plate and the side of the conductive element adjacent to the edge of the glass plate satisfies the following relationship: T ≥ K3+K4, where K3 denotes a width of the second compressive stress area, K4 denotes a width of the second tensile stress area.

Specifically, the following relationships is satisfied: 25 mm ≤ x3 ≤ 30 mm, where x3 denotes a distance between a glass edge and a side edge of the second tensile stress area adjacent to the glass edge. The following relationship is satisfied: 45 mm ≤ x4 ≤ 50 mm, where x4 denotes a distance between the glass edge and a side edge of the second tensile stress area away from the glass edge.

Specifically, the width K3 of the second compressive stress area satisfies the following relationship: K3 ≤ x3, and the width K4 of the second tensile stress area satisfies the following relationship: K4 = x4 - x3.

Specifically, the distance T between the edge of the glass plate and the side of the conductive element adjacent to the edge of the glass plate is equal to or greater than 50 mm.

Specifically, the glass plate further includes a first mold projection area at an edge. The first compressive stress area is located in the first mold projection area, and a width of the first mold projection area is in a range of 8 mm to 12 mm.

Specifically, the glass plate further includes a second mold projection area. The second mold projection area is located on a side of the first mold projection area away from the edge of the glass plate. A distance between the second mold projection area and the first mold projection area is in a range of 5 mm to 15 mm, and a width of the second mold projection area is in a range of 3 mm to 8 mm.

Specifically, a width of the conductive element is in a range of 15 mm to 20 mm.

Specifically, the conductive element is a bus bar printed on or bonded to the surface of the glass plate. The bus bar includes at least one of silver paste or copper foil.

Specifically, the glass plate further includes an ink layer. The ink layer is disposed on the surface of the glass plate and located at the edge of the glass plate. The conductive element is disposed on a surface of the ink layer.

Specifically, a functional element is further disposed on the surface of the glass plate. The conductive element is electrically connected to the functional element. The functional element includes at least one of an electric heating film, a conductive wire or a conductive silver paste.

The details of one or more embodiments of the present application are set forth in the accompanying drawings and the description hereinafter. Other features, objects, and advantages of the present application become apparent from the description, the accompanying drawings, and claims.

### BRIEF DESCRIPTION OF THE DRAWINGS

FIG. 1 is a schematic structural view of a glass plate in the present application.
FIG. 2 is a schematic view illustrating a position distribution of a first mold projection area of a glass plate in the present application.
FIG. 3 is a schematic view illustrating a position distribution of a first compressive stress area and a first tensile stress area of a glass plate in the present application.
FIG. 4 is a schematic view illustrating a position distribution of a second mold projection area of a glass plate in the present application.
FIG. 5 is a schematic view illustrating a position distribution of a second compressive stress area and a second tensile stress area of a glass plate in the present application.

### Illustration for Reference Numerals:

1, glass plate; 2, conductive element; 31, first compressive stress area; 32, first tensile stress area; 41, second compressive stress area; 42, second tensile stress area; 51, first mold projection area; 52, second mold projection area; 61, concave mold; 62, inner molding ring; 7, ink layer; 8, functional element.

### DETAILED DESCRIPTION

In order to describe the technical content, the object and the effect of the present application in detail, the following description is provided in conjunction with the implementations and accompanying drawings.

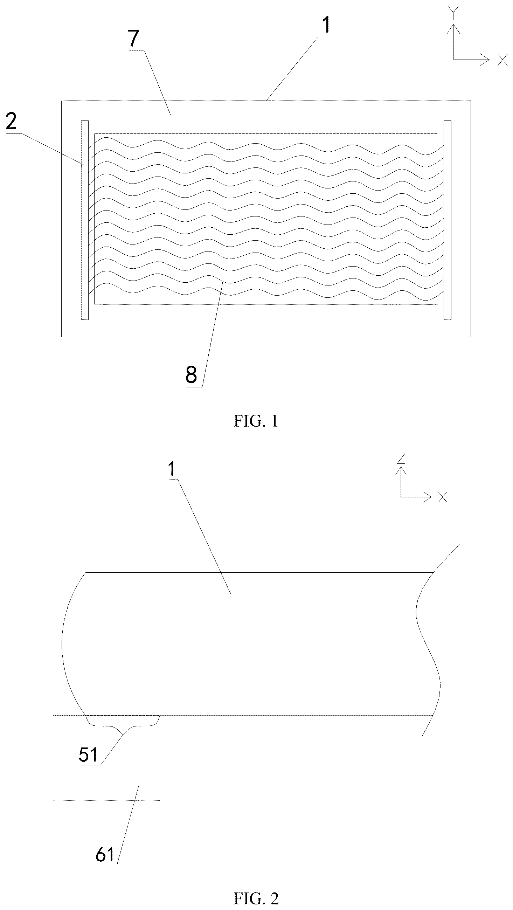

Referring to FIG. 1, a glass plate 1 is provided in the present application. A conductive element 2 that can be configured for electric heating is disposed on the surface of the glass plate 1. The conductive element 2 that can be electrically connected to a functional element 8 is disposed on each of two sides of the functional element 8. The conductive element 2 can be connected to an external power supply, so that the functional element 8 can be electrified and heated, thereby electrically heating the glass plate 1. An ink layer 7 is disposed at an edge of the glass plate 1, and the conductive element 2 is located within the range of the ink layer 7, so that the conductive element 2 can be shielded by the ink layer 7 after the glass plate 1 is mounted onto a vehicle body, thereby achieving an aesthetic effect. After being bent and molded, the glass plate 1 has different curvature in a X direction and a Y direction respectively, so that the glass plate 1 has a complex curved surface shape having curvatures at least two directions. In addition, the glass plate 1 as shown in FIG. 1 is rectangular. In some embodiments, the glass plate 1 can also have other shapes such as trapezoid, triangle, etc.

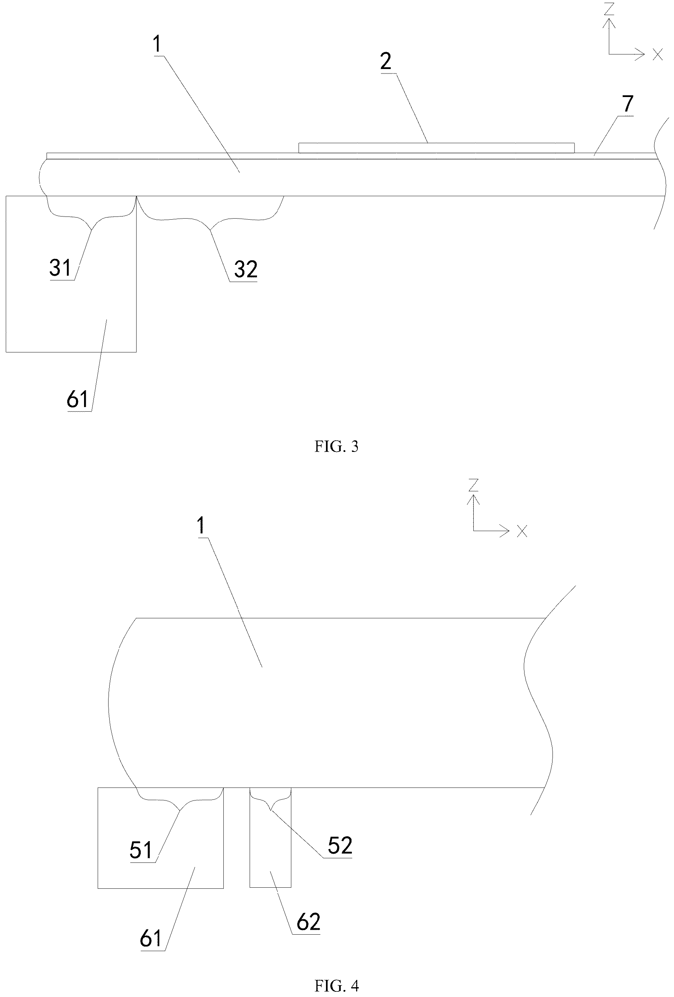

As shown in FIG. 3, the glass plate 1 includes an upper surface oriented in a Z direction in FIG. 3, and a lower surface oriented in the opposite direction of the Z direction. In the embodiment shown in FIG. 3, the conductive element 2, the ink layer 7 and the conductive element 2 are all located on the upper surface of the glass plate 1. In other embodiments, the ink layer 7 can also be located on the lower surface of the glass plate 1.

As shown in FIG. 3, the glass plate 1 includes a first compressive stress area 31 and a first tensile stress area 32 which are adjacent to each other and arranged in sequence from the edge to the inside. The width of the first compressive stress area 31 is denoted by K1, and the width of the first tensile stress area 32 is denoted by K2. The glass plate 1 is supported on a ring-shaped mold during the process of being bent and molded. An inner edge of a contact position between the mold and the glass plate 1 forms a boundary between the first compressive stress area 31 and the first tensile stress area 32. The first compressive stress area 31 is located on a side of the inner edge of the contact position between the mold and the glass plate 1, adjacent to the edge of the glass plate. The first compressive stress area 31 is formed mainly due to the contact between the mold and the glass plate 1. Since the edge area of the glass plate 1 is supported on the mold in the molding process, the cooling rate between the edge area and the inside of the glass is inconsistent, thereby forming the first compressive stress area 31 subjected to compressive stress in the edge area. On a side of the inner edge of the contact position between the mold and the glass plate 1, adjacent to a middle portion of the glass plate 1, that is, on a side of the first compressive stress area 31 adjacent to the middle portion of the glass plate 1, the corresponding first tensile stress area 32 is formed. The mold generally refers to a concave mold 61 configured to support the glass plate 1 for the molding process. The concave mold 61 is in a ring shape and supports the edge of the glass plate 1 at the lower surface of the glass plate 1. Since the concave mold 61 is in a ring shape, the first compressive stress area 31 is also formed in a ring shape similar to the shape of the concave mold 61, and the first tensile stress area 32 is also formed in a ring shape and located on the side of the first compressive stress area 31 away from the edge of the glass plate 1.

As shown in FIG. 3, the conductive element 2 is disposed on at least one of the surfaces of the glass plate 1. An orthographic projection of the conductive element 2 on the surface of the glass plate 1 does not overlap with the first tensile stress area 32. A distance, which is denoted by T, between the edge of the glass plate 1 and a side of the conductive element 2 adjacent to the edge of the glass plate 1 satisfies the following relationship: T ≥ K1 + K2. The tensile stress in the area corresponding to the orthographic projection of the conductive element 2 on the surface of the glass plate 1 is less than or equal to 9 MPa.

Preferably, the conductive element 2 is disposed on the upper surface of the glass plate 1. In some embodiments, the conductive element 2 is a bus bar printed on or bonded to the upper surface of the glass plate 1. The bus bar includes at least one of silver paste or copper foil. The conductive element 2 mainly plays a role in guiding current. In the subsequent process of processing the glass plate 1, a terminal for conducting electricity need to be welded to the conductive element 2.

In some embodiments, as shown in FIG. 1, the functional element 8 is further disposed on the surface of the glass plate 1. The conductive element 2 is electrically connected to the functional element 8. The functional element 8 includes at least one of an electric heating film, a conductive wire or a conductive silver paste. After the functional element 8 is electrically connected to the conductive element 2, and the conductive element 2 is connected to the external power supply through the terminal welded on the surface of the conductive element 2, the functional element 8 can be electrified so as to realize auxiliary functions such as electric heating or signal transmission.

In addition, in the molding process of the glass plate 1, a tensile stress is generated in an area within the projection range of the conductive element 2 on the surface of the glass plate 1, and the range of the tensile stress generated on the surface of the glass plate 1 by the conductive element 2 does not exceed the projection range of the conductive element 2 on the surface of the glass plate 1. That is, the width of the tensile stress generated on the surface of the glass plate 1 by the conductive element 2 does not exceed the width of the conductive element 2 itself. Affected by the conductive element 2, a compressive stress is generated in part of the areas on two sides of the range of the tensile stress generated by the conductive element 2, i.e., a side adjacent to the edge of the glass plate 1 and a side away from the edge of the glass plate 1. Therefore, if the orthographic projection of the conductive element 2 on the surface of the glass plate 1 overlaps or partially overlaps with the first tensile stress area 32, the tensile stress generated by the conductive element 2 and the tensile stress in the first compressive tensile stress area are superimposed. After superimposition, the tensile stress value in the area of the glass plate 1 corresponding to the conductive element 2 will reach 15 MPa. In this case, the risk of cracking of the glass plate 1 is greatly increased, and especially after the terminal is welded to the conductive element 2, the possibility of cracking at the welding position can be further increased. However, since the orthographic projection of the conductive element 2 on the surface of the glass plate 1 is configured to not overlap with the first tensile stress area 32, and the distance T between the edge of the glass plate 1 and the side of the conductive element 2 adjacent to the edge of the glass plate 1 satisfies the following relationship: T ≥ K1 + K2, the orthographic projection of the conductive element 2 on the surface of the glass plate 1 can completely avoid the first tensile stress area 32 of the glass plate 1, and at the same time, the compressive stress generated by the conductive element 2 on the glass plate 1 can also counteract the tensile stress in the first tensile stress area 32, thereby achieving the effect of reducing the tensile stress in the first tensile stress area 32.

In some embodiments, a distance, which is denoted by x1, between the glass edge and the side edge of the first tensile stress area 32 adjacent to the glass edge satisfies the following relationship: 5 mm ≤ x1 ≤ 15 mm; and a distance, which is denoted by x2, between the glass edge and the side edge of the first tensile stress area 32 away from the glass edge satisfies the following relationship: 20 mm ≤ x2 ≤ 35 mm. In some specific embodiments, the distance x1 between the glass edge and the side edge of the first tensile stress area 32 adjacent to the glass edge is 5 mm, 8 mm, 10 mm, 15 mm, etc.; and the distance x2 between the glass edge and the side edge of the first tensile stress area 32 away from the glass edge is 20 mm, 25 mm, 30 mm, 35 mm, etc. The values in the corresponding range of the distance as described above are merely examples, and the values of the actual distances between the first tensile stress area 32 and the glass edge are not limited to the above specific values.

In some embodiments, the width K1 of the first compressive stress area 31 satisfies the following relationship: K1 ≤ x1, and the width K2 of the first tensile stress area 32 satisfies the following relationship: K2 = x2 - x1. The width K1 of the first compressive stress area 31 ranges from the inner edge of the contact position between the mold and the glass plate 1 towards the edge of the glass plate 1. Because the first tensile stress area 32 and the first compressive stress area 31 are adjacent to each other, the maximum width of the first compressive stress area 31 does not exceed the distance between the glass edge and the side of the first tensile stress area 32 adjacent to the glass edge. In some embodiments, the width of the first compressive stress area 31 is equal to the distance between the glass edge and the side of the first tensile stress area 32 adjacent to the glass edge. For example, the distance x1 between the glass edge and the side edge of the first tensile stress area 32 adjacent to the glass edge is 8 mm, and the width K1 of the first compressive stress area 31 is equal to or less than 8 mm. Similarly, when x1 is 10 mm, the width K1 of the first compressive stress area 31 is equal to or less than 10 mm.

Secondly, the width of the first tensile stress area 32 is a distance between the two side edges of the first tensile stress area 32. For example, the distance x1 between the glass edge and the side edge of the first tensile stress area 32 adjacent to the glass edge is 8 mm, and the distance x2 between the glass edge and the side edge of the first tensile stress area 32 away from the glass edge is 25 mm, then the width K2 of the first tensile stress area 32 is 17 mm. Similarly, when x1 is 10 mm, and x2 is 30 mm, the width K3 of the first tensile stress area 32 is 20 mm.

In some embodiments, the distance T between the edge of the glass plate 1 and the side of the conductive element 2 adjacent to the edge of the glass plate 1 is equal to or greater than 30 mm. When the glass plate 1 is press-molded using the concave mold 61 without an inner molding ring 62, the distance T between the edge of the glass plate 1 and the side of the conductive element 2 adjacent to the edge of the glass plate 1 being equal to or greater than 30 mm, can enable the position of the conductive element 2 to avoid the first tensile stress area 32 formed by the contact of the concave mold 61 with the glass plate 1, thereby reducing the risk of cracking of the glass plate 1.

In some embodiments, as shown in FIG. 2, the glass plate 1 further includes a first mold projection area 51 at the edge. The first compressive stress area 31 is located in the first mold projection area 51, and the width of the first mold projection area 51 is in a range of 8 mm to 12 mm. The mold used for glass molding is generally a concave mold 61. The first mold projection area 51 is a projection area of the concave mold 61 on the glass. The concave mold 61 is configured for supporting the glass plate 1 during molding of the glass plate 1, and the actual contact position between the glass plate 1 and the concave mold 61 is also located in the first mold projection area 51. The inner edge of the contact position between the concave mold 61 and the glass plate 1 forms the boundary between the first compressive stress area 31 and the first tensile stress area 32, that is, the inner edge of the first mold projection area 51 forms the boundary between the first compressive stress area 31 and the first tensile stress area 32. The first compressive stress area 31 is located on a side of the inner edge of the first mold projection area 51 adjacent to the edge of the glass plate 1, so that the first compressive stress area 31 is located in the first mold projection area 51, and the width of the first mold projection area 51 is equal to or approximately equal to the width of the first compressive stress area 31. The width of the first mold projection area 51 can be 8 mm, 10 mm, 12 mm, etc. In some embodiments, the width of the first compressive stress area 31 is less than the width of the first mold projection area 51.

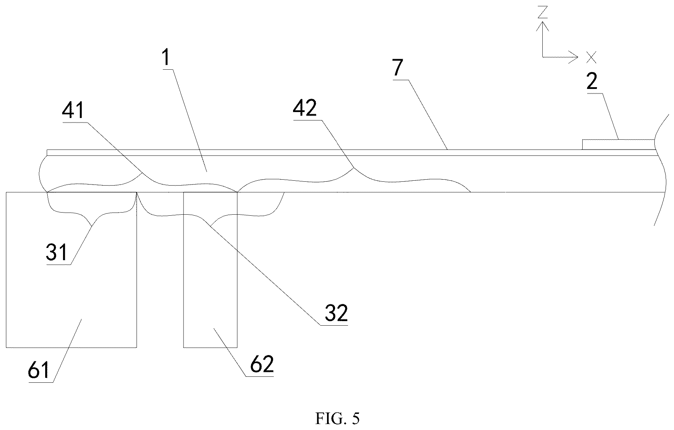

In some embodiments, as shown in FIG. 5, the glass plate 1 further includes a second compressive stress area 41, and a second tensile stress area 42 adjacent to the second compressive stress area 41 and located on a side of the second compressive stress area 41 away from the edge of the glass plate 1. The width of the second compressive stress area 41 is denoted by K3, and the width of the second tensile stress area 42 is denoted by K4. The distance T between the edge of the glass plate 1 and the side of the conductive element 2 adjacent to the edge of the glass plate 1 satisfies the following relationship: T ≥ K3 + K4. The second compressive stress area 41 and the second tensile stress area 42 are formed due to the contact of the inner molding ring 62 with the glass plate 1. If the orthographic projection of the conductive element 2 on the surface of the glass plate 1 overlaps or partially overlaps with the second tensile stress area 42, the tensile stress generated by the conductive element 2 and the tensile stress in the second tensile stress area are superimposed. After superimposition, the tensile stress value will reach 15 MPa in the area of the glass plate 1 corresponding to the conductive element 2. In this case, the risk of cracking of the glass plate 1 is greatly increased, and especially after the terminal is welded to the conductive element 2, the possibility of cracking at the welding position can be further increased. Since the distance T between the edge of the glass plate 1 and the side of the conductive element 2 adjacent to the edge of the glass plate 1 satisfies the following relationship: T ≥ K3 + K4, the orthographic projection of the conductive element 2 on the surface of the glass plate 1 can completely avoid the second tensile stress area 42 of the glass plate 2, and at the same time, the compressive stress generated by the conductive element 2 on the glass plate 1 can also counteract the tensile stress in the second tensile stress area 42, thereby achieving the effect of reducing the tensile stress in the second tensile stress area 42.

In some embodiments, as shown in FIG. 4, the glass plate 1 further includes a first mold projection area 51 at the edge. The first compressive stress area 31 is located in the first mold projection area 51, and a width of the first mold projection area 51 is in a range of 8 mm to 12 mm. The glass plate 1 further includes a second mold projection area 52. The second mold projection area 52 is located on the side of the first mold projection area 51 away from the edge of the glass plate 1. A distance between the second mold projection area 52 and the first mold projection area 51 is in a range of 5 mm to 15 mm, and a width of the second mold projection area 52 is in a range of 3 mm to 8 mm. The mold used for molding the glass plate 1 is generally a concave mold 61. The first mold projection area 51 is a projection area of the concave mold 61 on the glass plate 1. The concave mold 61 is configured for supporting the glass plate 1 during molding of the glass plate 1, and the actual contact position between the glass plate 1 and the concave mold 61 is also located in the first mold projection area 51. The inner edge of the contact position between the concave mold 61 and the glass plate 1 forms the boundary between the first compressive stress area 31 and the first tensile stress area 32, that is, the inner edge of the first mold projection area 51 forms the boundary between the first compressive stress area 31 and the first tensile stress area 32. The first compressive stress area 31 is located on the side of the inner edge of the first mold projection area 51 adjacent to the edge of the glass plate 1, so that the first compressive stress area 31 is located in the first mold projection area 51, and the width of the first mold projection area 51 is equal to or approximately equal to the width of the first compressive stress area 31. The width of the first mold projection area 51 can be 8 mm, 10 mm, 12 mm, etc. In some embodiments, the width of the first compressive stress area 31 is less than the width of the first mold projection area 51.

Further, as shown in FIGS. 4 to 5, the molds used for molding the glass plate 1include not only the ring-shaped concave mold 61, but also some of the molds further include an inner molding ring 62 located inside the concave mold 61. The inner molding ring 62 and the concave mold 61 have the same function, and both are configured for supporting the glass plate 1 during molding of the glass plate 1. However, the inner molding ring 62 is generally in contact with the glass plate 1 before the concave mold 61 is in contact with the glass plate 1 to pre-form the glass plate 1, so as to avoid that the molded surface of the glass plate 1 cannot be controlled due to the excessive weight of the middle portion of the glass plate 1 when the glass plate 1 is directly placed on the concave mold 61, thereby avoiding the edge of the molded surface from warping during the molding process. The projection area of the inner molding ring 62 on the glass plate 1 is the second mold projection area 52. Since the inner molding ring 62 is not in contact with the concave mold 61, the distance between the second mold projection area 52 and the first mold projection area 51 is generally in a range of 5 mm to 15 mm. In some specific embodiments, the distance between the second mold projection area 52 and the first mold projection area 51 can be 5 mm, 8 mm, 10 mm, 12 mm, 15 mm, etc. In some embodiments, the distance between the second mold projection area 52 and the first mold projection area 51 is in a range of 5 mm to 10 mm.

After the inner molding ring 62 is actually in contact with the glass plate 1, a compressive stress area and a tensile stress area are also formed on the glass plate 1, that is, the second compressive stress area 41 and the second tensile stress area 42 are formed on the glass plate 1. The inner edge of the contact position between the inner molding ring 62 and the glass plate 1 forms the boundary between the second compressive stress area 41 and the second tensile stress area 42, that is, the inner edge of the second mold projection area 52 forms the boundary between the second compressive stress area 41 and the second tensile stress area 42. The second compressive stress area 41 is located on the side of the inner edge of the second mold projection area 52 adjacent to the edge of the glass plate 1, but the second compressive stress area 41 is not limited to be within the range of the second mold projection area 52. In the embodiment as shown in FIG. 5, the second compressive stress area 41 extends from the inner edge of the second mold projection area 52 to the outer edge of the glass plate 1, that is, the second compressive stress area 41 and the first compressive stress area 31 are superimposed on each other, so that the compressive stress within the range of the first compressive stress area 31 is increased, which is conducive to improving the strength of the edge of the glass plate. Meanwhile, the second compressive stress area 41 and the first tensile stress area 32 are partially superimposed, so that the tensile stress in the part where the second compressive stress area 41 and the first tensile stress area 32 are overlapped is reduced or even disappears or forms a compressive stress, which is conducive to improving the strength of the edge of the glass plate.

In addition, the distance T between the edge of the glass plate 1 and the side of the conductive element 2 adjacent to the edge of the glass plate 1 is greater than the sum of the width of the second compressive stress area 41 and the width of the second tensile stress area 42. In this way, the tensile stress generated by the conductive element 2 on the glass plate 1 can be further avoided from superimposing with the first tensile stress area 32 or the second tensile stress area 42, thereby reducing the risk of cracking of the glass plate 1.

In some embodiments, the distance x2 between the glass edge and the side edge of the first tensile stress area 32 away from the glass edge satisfies the following relationship: 20 mm ≤ x2 ≤ 35 mm. The second tensile stress area 42 is located on the side of the first tensile stress area 32 away from the edge of the glass plate 1. A distance, which is denoted by x3, between the glass edge and the side edge of the second tensile stress area 42 adjacent to the glass edge satisfies the following relationship: 25 mm ≤ x3 ≤ 30 mm. A distance, which is denoted by x4, between the glass edge and the side edge of the second tensile stress area 42 away from the glass edge satisfies the following relationship: 45 mm ≤ x4 ≤ 50 mm. In some specific embodiments, the distance x3 between the glass edge and the side edge of the second tensile stress area 42 adjacent to the glass edge is 25 mm, 28 mm, 30 mm, etc.; and the distance x4 between the glass edge and the side edge of the second tensile stress area 42 away from the glass edge is 45 mm, 48 mm, 50 mm, etc. The values in the corresponding range of the distance as described above are merely examples, and the actual distance between the second tensile stress area 42 and the glass edge is related to the distribution of the first tensile stress area 32 and the second compressive stress area 41.

In some embodiments, the width K3 of the second compressive stress area 41 satisfies the following relationship: K3 ≤ x3, and the width K4 of the second tensile stress area 42 satisfies the following relationship: K4 = x4 - x3. The second compressive stress area 41 extends from the inner edge of the second mold projection area 52 to the outer edge of the glass plate 1 at most. In this case, the width K3 of the second compressive stress area 41 is equal to x3, i.e., K3=x3. In some embodiments, the range of the second compressive stress area 41 does not reach the outer edge of the glass plate 1, that is, the width K3 of the second compressive stress area 41 is less than x3, i.e., K3<x3. In addition, for example, the distance x3 between the glass edge and the side edge of the second tensile stress area 42 adjacent to the glass edge is 28 mm, in this case, the width K3 of the second compressive stress area 41 is 28 mm at most. Since the second tensile stress area 42 and the second compressive stress area 41 are adjacent to each other, the distance x3 between the glass edge and the side edge of the second tensile stress area 42 adjacent to the glass edge is 28 mm. In the case where the distance x4 between the glass edge and the side edge of the second tensile stress area 42 away from the glass edge is 50 mm, the width K4 of the second tensile stress area 42 is 22 mm.

In some embodiments, the distance T between the edge of the glass plate 1 and the side of the conductive element 2 adjacent to the edge of the glass plate 1 is equal to or more than 50 mm, i.e., T≥50mm. When the glass plate 1 is press-molded using the concave mold 61 with the inner molding ring 62, the distance T between the edge of the glass plate 1 and the side of the conductive element 2 adjacent to the edge of the glass plate 1 being equal to or greater than 50 mm, can enable the position of the conductive element 2 to avoid the first tensile stress area 32 formed by the contact of the concave mold 61 with the glass plate 1, and the second tensile stress area 42 formed by the contact of the inner molding ring 62 with the glass plate 1, thereby reducing the risk of cracking of the glass plate 1.

In some embodiments, the width of the conductive element 2 is in a range of 15 mm to 25 mm. The tensile stress generated by the action of the conductive element 2 on the glass plate 1 is related to the width of the conductive element 2 itself. In the case where the width of the conductive element 2 is in a range of 15 mm to 25 mm, the tensile stress generated by the action of the conductive element 2 on the glass plate 1 is in a range of 8 MPa to 10 MPa. Therefore, in the case where the conductive element 2 does not overlap with the first tensile stress area 32 or the second tensile stress area 42, the tensile stress generated by the conductive element 2 in such width range can better counteract the compressive stress of the glass plate 1 itself, so that the tensile stress in the area corresponding to the orthographic projection of the conductive element 2 on the surface of the glass plate 1 meets the requirement of less than or equal to 9 MPa. Meanwhile, the compressive stress in some areas of the surface of the glass plate 1 located on two sides of the conductive element 2 due to the conductive element 2 can also partially overlap with the first tensile stress area 32 or the second tensile stress area 42, thereby reducing the tensile stress value of the first tensile stress area 32 or the second tensile stress area 42 to a certain extent.

In some embodiments, as shown in FIG. 1, the glass plate 1 further includes an ink layer 7. The ink layer 7 is disposed on the surface of the glass plate 1 and located at the edge of the glass plate 1. The conductive element 2 is disposed on the surface of the ink layer 7. The ink layer 7 is generally arranged around the edge of the glass plate 1. Due to the poor bonding performance of the glass surface, the ink layer 7 needs to be printed on the glass surface to ensure good bonding performance between the glass plate 1 and accessories used for connection. Meanwhile, the ink layer 7 can also serve to shield the accessories connected between the glass plate 1 and the sheet metal of the vehicle body, thereby achieving a certain aesthetic effect. Therefore, by providing the conductive element 2 on the surface of the ink layer 7, the bonding performance between the conductive element 2 and the surface of the glass plate 1 can be improved, and at the same time, the conductive element 2 can be shielded by the ink layer 7 to improve the overall aesthetic of the glass plate 1.

The above description only illustrates embodiments of this application, and is not intended to limit the patent scope of this application. Any equivalent change made on the basis of the description and the accompanying drawings of this application, or directly or indirectly application thereof in the relevant technical field, are likewise included in the scope of patent protection of the present application.

## Claims

1. A glass plate, comprising a first compressive stress area and a first tensile stress area which are adjacent to each other and arranged in sequence from an edge to an inside, a width of the first compressive stress area being denoted by K1, and a width of the first tensile stress area being denoted by K2;
wherein a conductive element is disposed on at least one surface of the glass plate, an orthographic projection of the conductive element on the surface of the glass plate does not overlap with the first tensile stress area; the following relationship is satisfied: T ≥ K1+K2, wherein T denotes a distance between an edge of the glass plate and a side of the conductive element adjacent to the edge of the glass plate; and a tensile stress in an area corresponding to the orthographic projection of the conductive element on the surface of the glass plate is less than or equal to 9 MPa.

2. The glass plate according to claim 1, wherein the following relationship is satisfied: 5 mm ≤ x1 ≤ 15 mm, wherein x1 denotes a distance between a glass edge and a side edge of the first tensile stress area adjacent to the glass edge; and the following relationship is satisfied: 20 mm ≤ x2 ≤ 35 mm, wherein a distance between the glass edge and a side edge of the first tensile stress area away from the glass edge.

3. The glass plate according to claim 2, wherein the width K1 of the first compressive stress area satisfies the following relationship: K1 ≤ x1, and the width K2 of the first tensile stress area satisfies the following relationship: K2 = x2 - x1.

4. The glass plate according to any one of claims 1 to 3, wherein the distance T between the edge of the glass plate and the side of the conductive element adjacent to the edge of the glass plate is equal to or greater than 30 mm.

5. The glass plate according to any one of claims 1 to 4, further comprising a second compressive stress area, and a second tensile stress area adjacent to the second compressive stress area and located on a side of the second compressive stress area away from the edge of the glass plate, wherein the distance T between the edge of the glass plate and the side of the conductive element adjacent to the edge of the glass plate satisfies the following relationship: T ≥ K3+K4, wherein K3 denotes a width of the second compressive stress area, K4 denotes a width of the second tensile stress area.

6. The glass plate according to claim 5, wherein the following relationships is satisfied: 25 mm ≤ x3 ≤ 30 mm, wherein x3 denotes a distance between a glass edge and a side edge of the second tensile stress area adjacent to the glass edge; and the following relationship is satisfied: 45 mm ≤ x4 ≤ 50 mm, wherein x4 denotes a distance between the glass edge and a side edge of the second tensile stress area away from the glass edge.

7. The glass plate according to claim 6, wherein the width K3 of the second compressive stress area satisfies the following relationship: K3 ≤ x3, and the width K4 of the second tensile stress area satisfies the following relationship: K4 = x4 - x3.

8. The glass plate according to any one of claims 5 to 7, wherein the distance T between the edge of the glass plate and the side of the conductive element adjacent to the edge of the glass plate is equal to or greater than 50 mm.

9. The glass plate according to any one of claims 5 to 8, wherein the second compressive stress area and the first compressive stress area are superimposed on each other.

10. The glass plate according to any one of claims 5 to 9, wherein the second compressive stress area and the first tensile stress area are partially superimposed.

11. The glass plate according to any one of claims 1 to 10, further comprising a first mold projection area at an edge, wherein the first compressive stress area is located in the first mold projection area, and a width of the first mold projection area is in a range of 8 mm to 12 mm.

12. The glass plate according to claim 11, wherein an inner edge of the first mold projection area forms a boundary between the first compressive stress area and the first tensile stress area.

13. The glass plate according to any one of claims 11 to 12, further comprising a second mold projection area, wherein the second mold projection area is located on a side of the first mold projection area away from the edge of the glass plate, a distance between the second mold projection area and the first mold projection area is in a range of 5 mm to 15 mm, and a width of the second mold projection area is in a range of 3 mm to 8 mm.

14. The glass plate according to claim 13, wherein an inner edge of the second mold projection area forms a boundary between the second compressive stress area and the second tensile stress area.

15. The glass plate according to any one of claims 1 to 14, wherein a width of the conductive element is in a range of 15 mm to 20 mm.

16. The glass plate according to any one of claims 1 to 15, wherein the conductive element is a bus bar printed on or bonded to the surface of the glass plate, and the bus bar comprises at least one of silver paste or copper foil.

17. The glass plate according to any one of claims 1 to 16, further comprising an ink layer, wherein the ink layer is disposed on the surface of the glass plate and located at the edge of the glass plate, and the conductive element is disposed on a surface of the ink layer.

18. The glass plate according to any one of claims 1 to 17, wherein a functional element is further disposed on the surface of the glass plate, the conductive element is electrically connected to the functional element, and the functional element comprises at least one of an electric heating film, a conductive wire or a conductive silver paste.

19. The glass plate according to any one of claims 1 to 18, wherein a range of tensile stress generated on the surface of the glass plate by the conductive element does not exceed a projection range of the conductive element on the surface of the glass plate.

20. The glass plate according to any one of claims 1 to 19, wherein a compressive stress due to the conductive element is formed in some areas on two sides of a range of tensile stress generated by the conductive element.
